# EUROPÄISCHE PATENTSCHRIFT

(11) **EP 3 610 198 B1**
(45) Veröffentlichungstag und Bekanntmachung des Hinweises auf die Patenterteilung: **09.11.2022**
(21) Anmeldenummer: 18712589.3
(22) Anmeldetag: 20.03.2018
(51) Int. Cl.: F24C 7/08, G01N 21/25, G01N 21/84, A47J 37/08

(54) **BETREIBEN EINES GARGERÄTS**
OPERATING A COOKING APPLIANCE
FONCTIONNEMENT D'UN APPAREIL DE CUISSON

(30) Priorität: 10.04.2017 DE 102017206056
(43) Veröffentlichungstag der Anmeldung: 19.02.2020
(73) Patentinhaber: BSH Hausgeräte GmbH, 81739 München (DE)
(72) Erfinder: EITER, Hans-Martin, 84558 Kirchweidach (DE); SCHÜRF, Stefan, 83313 Siegsdorf (DE)
(86) Internationale Anmeldenummer: PCT/EP2018/057038
(87) Internationale Veröffentlichungsnummer: WO 2018/188913

(56) Entgegenhaltungen:
- EP-A1- 0 682 243
- EP-A1- 2 713 107
- WO-A2-2014/053002
- WO-A2-2015/185211
- CN-A- 105 451 566
- DE-A1-102005 014 713
- DE-A1-102014 114 901
- GB-A- 2 098 725
- JP-A- H03 144 325
- JP-A- H05 209 825
- JP-A- S61 265 429

## Beschreibung

Die Erfindung betrifft ein Verfahren zum Betreiben eines Gargeräts, bei dem ein Garraum mit Licht verschiedener Wellenlängenbereiche bestrahlt wird und in dem Garraum reflektiertes Licht gemessen wird. Die Erfindung betrifft außerdem ein Gargerät, wobei das Gargerät zum Ablauf des Verfahrens eingerichtet ist und einen Garraum, mindestens eine Lichtquelle zum Abstrahlen von Licht in den Garraum und mindestens eine Kamera zum Messen von in dem Garraum reflektierten Lichts aufweist. Die Erfindung ist besonders vorteilhaft anwendbar auf Haushalts-Gargeräte, insbesondere Backöfen, Dampfgarer, Mikrowellenöfen und eine beliebige Kombination davon.

WO 2015/059931 A1 offenbart einen Heizkocher. Der Heizkocher enthält eine Heizkammer, die Lebensmittel aufnimmt, eine Heizeinheit, die das Nahrungsmittel in der Heizkammer erwärmt, eine Abbildungseinheit, die Bilddaten des Lebensmittels nach dem Einbringen in der Heizkammer aufnimmt, eine Einstelleinheit, die eine Benutzereingabe in Bezug auf einen Heizsteuerungsinhalt, der einen Heizbetrieb definiert, akzeptiert, eine Speichereinheit, die Steuerinformation speichert, in der die Bilddaten und der Heizsteuerungsinhalt, der dem von den Bilddaten spezifizierten Lebensmittel entspricht, miteinander verknüpft sind, gespeichert sind, eine Heizstarttaste, die den Start des Heizbetriebs initiiert, und eine Speicheraktualisierungseinheit, welche die Bilddaten und den Heizsteuerungsinhalt miteinander verbindet und die Steuerinformation innerhalb der Speichereinheit aktualisiert, wenn die Einstelleinheit die Benutzereingabe akzeptiert. Dann initiiert die Heizstarttaste den Start des Heizbetriebes.

WO 2015/185608 A1 offenbart Gargerät, aufweisend einen Garraum mit einer mittels einer Tür verschließbaren Beschickungsöffnung, einen in Bezug auf den Garraum fest angeordneten Lichtmusterprojektor zum Erzeugen eines Lichtmusters, eine Kamera zum Aufnehmen von Bildern aus einem durch das Lichtmuster bestrahlbaren Bereich und eine mit der Kamera gekoppelte Auswerteeinrichtung zur Bestimmung einer dreidimensionalen Form eines Objekts, das sich in dem durch das Lichtmuster bestrahlbaren Bereich befindet, mittels einer Lichtmusterauswertung, wobei der Lichtmusterprojektor zum Einstrahlen eines Lichtmusters in den Garraum angeordnet ist, die Kamera in Bezug auf den Garraum fest angeordnet ist, die Kamera zum Aufnehmen von Bildern aus einem durch das Lichtmuster bestrahlbaren Bereich des Garraums auch bei verschlossenem Garraum angeordnet ist und die Auswerteeinrichtung zur wiederholten Berechnung der dreidimensionalen Form des mindestens einen Objekts, das sich in dem durch das Lichtmuster bestrahlbaren Bereich des Garraums befindet, während eines Betriebs des Gargeräts eingerichtet ist.

DE 10 2013 211 097 A1 betrifft ein Kältegerät, das ein Kameramodul zum Erfassen von ersten Bilddaten eines Kühlgutes zu einem ersten Zeitpunkt und zweiten Bilddaten des Kühlgutes zu einem zweiten Zeitpunkt und eine Frischebestimmungseinrichtung zum Bestimmen eines Frischezustands des Kühlgutes auf Basis der ersten Bilddaten und der zweiten Bilddaten umfasst.

WO 2015/185211 A2 offenbart ein Wärmebehandlungsüberwachungssystem, umfassend ein Wärmebehandlungsgerät , das eine Wärmebehandlungskammer und mindestens eine Lichtquellenbefestigung zum Befestigen einer Lichtquelle zum Beleuchten des Inneren der Wärmebehandlungskammer umfasst, und eine Überwachungsvorrichtung , die eine Kamera , eine Kameralichtquelle und einen Befestigungsteil umfasst, wobei der Befestigungsteil geeignet ist, entfernbar an der Beleuchtungsquellenbefestigung befestigt zu werden.

JP-H-03144325 A offenbart eine Methode zum Unterscheiden eines Garzustands einer zu erhitzenden Substanz durch Erfassen eines von der Substanz reflektierten Lichts durch zwei lichtempfindliche Elemente, die Spitzen der spektralen Empfindlichkeit bei einer Wellenlänge von rotem oder infrarotem Licht und einer von der ersteren verschiedenen Wellenlänge aufweisen und durch Berechnen eines Ausgangsverhältnisses davon.

EP 2 713 107 A1 offenbart ein Gargerät mit einem Garraum zum Garen von Gargut, welches eine Steuervorrichtung zum Durchführen einer Mehrzahl von vorbestimmten Garprogrammen (P1-P3), eine erste Vorrichtung zum Bestimmen der Gargutart des in dem Garraum befindlichen Garguts, und eine zweiten Vorrichtung zum Bestimmen der Gargutmenge des in dem Garraum befindlichen Garguts aufweist. Dabei ist die Steuervorrichtung dazu eingerichtet ist, ein Garprogramm (P1-P3) aus der Mehrzahl der vorbestimmten Garprogramme (P1-P3) in Abhängigkeit der bestimmten Gargutart und der bestimmten Gargutmenge auszuwählen.

DE 10 2005 014 713 A1 offenbart eine Sensorvorrichtung mit einer Datenverarbeitungseinheit zum Bestimmen eines Bräunungsgrads eines in einem Garraum angeordneten Garguts und mit wenigstens einem Sensor zum Erfassen einer vom Gargut reflektierten Strahlungsintensität. Um eine Sensorvorrichtung für Gargeräte bereitzustellen, mittels der ein Bräunungsgrad eines Garguts sicher, zuverlässig und insbesondere unabhängig von einer Größe und Form des Garguts bestimmt werden kann, wird vorgeschlagen, dass die Datenverarbeitungseinheit zum Bestimmen eines Relevanzparameters für eine Kenngröße der erfassten Strahlungsintensität abhängig von dem zeitlichen Verlauf der erfassten Strahlungsintensität vorgesehen ist.

Es ist die **Aufgabe** der vorliegenden Erfindung, die Nachteile des Standes der Technik zumindest teilweise zu überwinden und insbesondere eine Möglichkeit bereitzustellen, einen Inhalt eines Garraums eines Haushalts-Gargeräts auf besonders einfache Weise mit hohem Informationsgehalt zu bestimmen. Es ist die Aufgabe, auf der Grundlage einer so ermittelten Information einen Betrieb, z.B. einen Garablauf, des Haushalts-Gargeräts zu steuern.

Diese Aufgabe wird gemäß den Merkmalen der unabhängigen Ansprüche gelöst. Bevorzugte Ausführungsformen sind den abhängigen Ansprüchen entnehmbar Die Aufgabe wird gelöst durch ein Verfahren nach Anspruch 1.

Dieses Verfahren ergibt den Vorteil, dass sich in dem Garraum befindliche Stoffe besonders zuverlässig und kostengünstig bestimmen lassen. Solche Stoffe können Stoffe des Gargeräts selbst (z.B. Emaille, eine katalytische Beschichtung usw.), an einer Fläche anhaftende Stoffe (z.B. Verschmutzungen wie Fett, Lebensmittelrückstände), Gargut und/oder in einer Garraumatmosphäre befindliche Stoffe (wie Wasserdampf, Ausdünstungen von Gargut usw.) sein, wobei erfindungsgemäß der Stoff eines Gargutbehälters ermittelt wird.

Dass das Licht mittels einer Kamera bildpunktartig aufgenommen wird, kann auch als "hyperspektrale Bildgebung" bezeichnet werden. Durch das weite Blickfeld einer Kamera wird eine ortsaufgelöste Spektroskopie ermöglicht. Durch das weite Blickfeld können insbesondere Eigenschaften des Garguts gleichzeitig mit Garraumeigenschaften (z.B. Verschmutzung usw.) überwacht werden. Zudem lässt sich eine besonders hohe Genauigkeit der spektroskopischen Auswertung dadurch erreichen, dass bestimmte nicht interessierende Bildbereiche ausgeblendet bzw. nicht berücksichtigt werden. Ein weiterer Vorteil der Verwendung einer Kamera liegt darin, dass ein durch die Kamera aufgenommenes Bild einem Nutzer übermittelt werden kann. Zudem kann mittels der Kamera die Objekterkennung durchgeführt werden.

Dadurch, dass mittels der Kamera eine Objekterkennung durchgeführt wird und eine spektroskopische Auswertung abhängig von einer Art des erkannten Objekts durchgeführt wird, können innerhalb kurzer Zeit mehrere objektspezifische spektroskopische Auswertungen automatisch durchgeführt werden. Dies ermöglicht einen besonders nutzerfreundlichen und zuverlässigen Betrieb des Haushalts-Gargeräts.

Das Gargerät ist insbesondere ein Haushalts-Gargerät. Das Gargerät kann eine Ofenfunktionalität, eine Dampfgarfunktionalität und/oder eine Mikrowellenfunktionalität aufweisen. So kann das Gargerät einen Backofen mit Dampfgarfunktionalität und/oder Mikrowellenfunktionalität aufweisen.

Unter einem Messergebnis kann ein Messwert oder eine daraus abgeleitete Messgröße verstanden werden.

Dass Messergebnisse spektroskopisch ausgewertet werden, kann insbesondere umfassen, dass die Messergebnisse verschiedener Wellenlängenbereiche zusammen bzw. verknüpft betrachtet werden. Dies ermöglicht eine besonders zuverlässige und vielfältige Erkennung der Inhaltsstoffe in einem Garraum. Die spektroskopische Auswertung kann auch als Spektralanalyse bezeichnet oder angesehen werden.

Dass die spektroskopische Auswertung dazu verwendet wird, den Betrieb, insbesondere Garablauf, des Gargeräts abhängig von einem Ergebnis der Auswertung zu ändern kann auch so verstanden werden, dass das Gargeräts auch abhängig von der spektroskopischen Auswertung steuerbar ist.

Dass ein Betrieb, insbesondere Garablauf, des Gargeräts abhängig von einem Ergebnis der Auswertung geändert wird, kann umfassen, dass mit einem Eintritt eines durch die Auswertung erkannten Ereignisses allgemein eine Aktion ausgelöst wird, insbesondere ein Garablauf geändert wird (z.B. eine Temperatur erhöht oder erniedrigt wird, eine Dampfbeaufschlagung begonnen oder beendet wird, ein Garvorgang abgebrochen wird usw.). Ferner kann die spektroskopische Auswertung dazu verwendet werden, ein Garzeitende zu bestimmen oder vorherzusagen. Auch kann das Auslösen der Aktion eine - z.B. optische und/oder akustische - Ausgabe eines Hinweises an einen Nutzer umfassen. Darüber hinaus ermöglicht die spektroskopische Auswertung (alleine oder im Zusammenspiel mit anderen Methoden, z.B. einer Objekterkennung) eine automatische Garguterkennung, z.B. mit dem Ziel, ein passendes Garprogramm auszuwählen.

Es ist eine Weiterbildung, dass das in den Garraum eingestrahlte Licht verschiedener Wellenlängenbereiche auf mindestens eine gemeinsame Messfläche fällt und von mindestens einer Kamera das von dieser Messfläche reflektierte Licht gemessen wird. Die Messfläche kann zumindest teilweise einer Oberfläche einer Garraumwandung entsprechen, z.B. einer Decke, einem Boden, einer Seitenwand, einer Rückwand usw. Die Messfläche kann alternativ oder zusätzlich zumindest teilweise einer Oberfläche einer Prallwand entsprechen. Die Messfläche kann alternativ oder zusätzlich zumindest teilweise einer Oberfläche einer Garraumtür entsprechen. Die Messfläche kann alternativ oder zusätzlich zumindest teilweise einer Oberfläche eines Gargutträgers (z.B. eines Backblechs oder eines Rosts) entsprechen. Die Messfläche kann alternativ oder zusätzlich zumindest teilweise einer Oberfläche eines Garguts entsprechen. Es kann genau eine Messfläche verwendet werden. Alternativ können mehrere voneinander beabstandete Messflächen vorhanden sein oder verwendet werden.

Alternativ oder zusätzlich kann das in den Garraum eingestrahlte Licht von der Atmosphäre des Garraums reflektiert werden, z.B. durch Schwebteilchen, Rauch und/oder Dampf.

Das in dem Garraum reflektierte Licht kann diffus und/oder spekular reflektiertes Licht sein. Ein direkt von einer Lichtquelle in eine Kamera gestrahltes Licht sollte hingegen insbesondere nicht berücksichtigt werden,

Es ist auch eine Weiterbildung, dass das Licht verschiedener Wellenlängenbereiche mittels einer polychromen Lichtquelle, z.B. einer Halogenlampe erzeugt wird. Die spektroskopische Auswertung kann dadurch ermöglicht werden, dass von der Messfläche reflektiertes Licht selektiv in Bezug auf die Wellenlängenbereiche ("wellenlängenselektiv") gemessen wird. Beispielweise können zur wellenlängenselektiven Messung verschiedene Fotodioden mit unterschiedlichen spektralen Empfindlichkeitsbereichen verwendet werden.

Es ist eine dazu alternative Ausgestaltung, dass Licht verschiedener Wellenlängenbereiche zeitlich seriell oder nacheinander auf die Messfläche eingestrahlt wird. Dies ergibt den Vorteil, dass die Messung wenige Kameras benötigt. Insbesondere für den Fall, dass die Kamera Licht aller Wellenlängenbereiche detektieren kann, kann je nach Messaufbau nur eine Kamera ausreichen.

Es ist noch eine Ausgestaltung, dass die Messergebnisse dadurch spektroskopisch ausgewertet werden, dass Verhältnisse ihrer wellenlängenselektiv gemessenen Intensitäten bestimmt werden. Dadurch lassen sich Inhaltsstoffe in dem Garraum besonders effektiv bestimmen. Die Gruppe der - ggf. normierten - Intensitäten kann auch als "Signatur" oder "Fingerabdruck" bezeichnet werden. Beispielsweise ist eine gezielte Regelung einer Dampferzeugung mittels eines Vergleichs einer gemessenen Intensität bei Wellenlängenbereichen mit hoher und niedriger Wasserabsorption möglich. Es ist jedoch grundsätzlich nicht notwendig, bestimmte Stoffe einzeln quantitativ oder qualitativ zu identifizieren, auch wenn dies grundsätzlich möglich ist. Es kann in einer Weiterbildung vielmehr ausreichen, eine einem bestimmten und ggf. unbekannten Stoff, Stoffgemisch, Zustand (Bräunungszustand, Verschmutzungszustand, Lichtstreufähigkeit usw.) und/oder Garguteigenschaften empirisch zugeordnete Signatur zu erkennen.

Es ist eine weitere Ausgestaltung, dass die Messergebnisse dadurch spektroskopisch ausgewertet werden, dass zeitliche Änderungen der Intensitätsverhältnisse bestimmt werden (was auch als ein zeitlicher Vergleich von Intensitätsverhältnissen bezeichnet werden kann). Dadurch kann eine Entwicklung von Stoff, Stoffgemisch, Zustand und/oder Garguteigenschaft mitberücksichtigt werden. Insbesondere können so chemische Änderungen während eines Garprozesses beobachtet werden, um mit dieser Information einen Garablauf zu steuern. Die Bestimmung der zeitlichen Änderungen von Intensitätsverhältnissen kann umfassen, dass die zeitlichen Änderungen nur für einen vorgegebenen Wellenlängenbereich, für mehrere Wellenlängenbereiche oder für alle Wellenlängenbereiche bestimmt werden. Es ist also auch ein zeitlicher Vergleich von Spektren umfasst. Der Vergleich umfasst auch einen Vergleich zeitlicher Änderungen in unterschiedlichen Wellenlängenbereichen.

Es ist eine Weiterbildung, dass das aus dem Garraum stammende Licht ortausgelöst aufgenommen wird und spektroskopisch ausgewertet wird ("ortsaufgelöste Spektroskopie"). Dadurch können insbesondere Eigenschaften des Garguts gleichzeitig mit Garraumeigenschaften (z.B. Verschmutzung usw.) überwacht werden. Zur Ortsauflösung können z.B. mehrere Fotodioden verwendet werden, die auf unterschiedliche Messflächen gerichtet sind.

Eine spektroskopische Auswertung der Messergebnisse, insbesondere auch eine zeitliche Änderungen kann z.B. durch Bildvergleich durchgeführt werden.

Die Kamera kann mindestens einen Halbleitersensor aufweisen, z.B. indem sie als eine CMOS- oder als eine CCD-Kamera ausgebildet ist. Eine an einem Bildpunkt aufgenommene Intensität kann in Form eines Intensitäts- oder Helligkeitswerts, z.B. nach Art eines Grauwerts, vorliegen. Beispielsweise kann der Intensitätswert 256 verschiedene Werte annehmen. Die Kamera kann in einer Variante für einen sichtbaren Farbraum empfindliche Einzelsensoren (z.B. diskrete Fotodioden) aufweisen (z.B. rot-, grün- und blauempfindliche Einzelsensoren). Zusätzlich oder alternativ kann die Kamera infrarotempfindliche, insbesondere nahinfrarot-empfindliche Einzelsensoren aufweisen.

Das bildpunktartig aufgebaute Bild kann also in mehrere - insbesondere nicht überlappende - Teilbereiche aufgeteilt werden, die jeweilige Gruppe von Bildpunkten aufweisen.

Die Teilbereiche werden einzeln spektroskopisch ausgewertet. Falls ein Teilbereich mehrere Bildpunkte umfasst, können die zugehörigen gemessenen Intensitäten aufaddiert oder gemittelt werden. Falls ein Teilbereich mehrere Bildpunkte umfasst, können ein besonders geringes Rauschen und/oder eine besonders geringe Aufnahmedauer erreicht werden.

Es ist eine zum Erreichen einer besonders hohen örtlichen Auflösung vorteilhafte Ausgestaltung, dass für jeden Bildpunkt jeweilige Messergebnisse spektroskopisch ausgewertet werden. In diesem Fall weist also jeder Teilbereich genau einen Bildpunkt auf.

Erfindungsgemäß wird in einem von der Kamera aufgenommenen Bild ein Gargutbehälter durch Objekterkennung erkannt und folgend anhand der zugehörigen Bildpunkte (Pixel) eine für einen Gargutbehälter relevante spektroskopische Auswertung durchgeführt. So kann durch die spektroskopische Auswertung ein Material des Gargutbehälters erkannt werden. Besteht der Gargutbehälter z.B. aus Kunststoff und soll mit dem Haushaltsgargerät ein Backvorgang durchgeführt werden, kann einem Nutzer eine Warnung ausgegeben werden und der Backvorgang - ggf. bis zu einer Bestätigung durch einen Nutzer - nicht gestartet oder unterbrochen werden. Dies kann analog für den Fall eines Mikrowellengeräts und eines metallischen Gargutbehälters durchgeführt werden.

Auch kann in einem von der Kamera aufgenommenen Bild Gargut durch Objekterkennung erkannt werden und folgend anhand der zugehörigen Bildpunkte eine für das Gargut relevante spektroskopische Auswertung durchgeführt werden. Beispielsweise kann durch die spektroskopische Auswertung ein Bräunungsgrad erkannt werden, z.B. durch spektroskopische Erkennung von bei einer Bräunung ablaufenden chemischen Vorgängen und/oder von einer Bräunung vorausgehenden chemischen Vorgängen, z.B. einem Austrocknen einer Oberfläche eines Garguts. Als das Ergebnis einer Bräunungserkennung kann eine Garraumtemperatur geändert werden und ggf. auch ein Garablauf beendet werden. Das Erkennen der Bräunung und/oder der Austrocknung ermöglicht ein frühzeitiges Abschalten des Garvorgangs zum Erreichen einer gewünschten Bräunung unter Berücksichtigung der im System vorhandenen Restwärme.

Allgemein kann die aus der spektroskopischen Auswertung gewonnene Information die Objekterkennung unterstützen. So kann die Verknüpfung beider Informationen dazu benutzt werden, eine höhere Genauigkeit bei der Objekterkennung zu erreichen, beispielsweise um Gargut oder Garguteigenschaften verbessert zu erkennen. Beispielsweise können im Rahmen einer Objekterkennung als ähnlich aussehend erkannte Spesen oder Lebensmittel durch die spektroskopische Auswertung mit höherer Genauigkeit voneinander unterschieden werden, falls die Speisen einen merklich unterschiedlichen Wassergehalt aufweisen.

Die spektroskopische Auswertung - mit einer Wellenlänge im Infrarotbereich - und die Kamera können also komplementäre Informationen liefern, durch welche Erkennungsmöglichkeiten verbessert werden können, beispielsweise auch durch Eingrenzung auf bestimmte Arten von Gargut oder Speise. Eine daraus abgeleitete Vorgehensweise zur Gargutidentifizierung kann Ergebnisse liefern, die über die Summe der einzelnen Bestimmungsmethoden hinausgehen.

Beide Bestimmungsmethoden bieten nämlich unterschiedliche, teils komplementäre Möglichkeiten, einen Garrauminhalt zu gruppieren. So können durch die spektroskopische Auswertung chemisch ähnliche Stoffgruppen bestimmt werden, die mittels der Objekterkennung erkannten unterschiedlichen geometrischen Formen weiter differenziert werden können.

Beispielsweise ermöglich eine Kombination von spektroskopisch erkanntem Gemüse und einer optisch als Objekt erkannten Auflaufform eine Identifizierung eines Gemüseauflaufs. Dies ist besonders vorteilhaft, da Gemüse optisch mittels einer Kamera schwer zu erkennen ist: Gemüse sehen sehr unterschiedlich aus und werden für die Zubereitung unterschiedlich geschnitten. Als ein weiteres Beispiel kann die Kamera mittels einer Objekterkennung viele kleine Objekte ohne Soße auf einem Backblech erkennen und durch spektroskopische Auswertung Gemüse erkannt werden. Dann kann auf ein Vorliegen von Grillgemüse geschlossen werden. Als ein weiteres Beispiel kann die Kamera mittels einer Objekterkennung viele kleine Objekte ohne Soße auf einem Backblech erkennen und durch spektroskopische Auswertung Teig erkannt werden. Dann kann auf ein Vorliegen von Kleingebäck geschlossen werden.

Zudem kann in einem von der Kamera aufgenommenen Bild durch Objekterkennung eine Garraumwandung erkannt werden und folgend anhand der zugehörigen Bildpunkte eine für die Garraumwandung relevante spektroskopische Auswertung durchgeführt werden.

Beispielsweise kann durch die spektroskopische Auswertung eine Verschmutzung bzw. ein Verschmutzungsgrad der Ofenmuffel bestimmt werden. Der Verschmutzungsgrad kann beispielsweise durch die Anwesenheit von typischen Verschmutzungsstoffen wie Fett erkannt werden. Diese Erkennung des Verschmutzungsgrads kann beispielsweise dazu genutzt werden, um einem Nutzer einen Hinweis auf eine Reinigung des Garraums zu geben, z.B. auf ein Durchführen einer pyrolytischen oder katalytischen Selbstreinigung. Dies kann analog auf das Backblech, eine Prallwand und eine Garraumtür angewandt werden.

Zusätzlich können eine Anwesenheit und eine Konzentration von Dampf in dem Garraum durch spektroskopische Auswertung bestimmt werden. Dies ermöglicht eine genaue Regelung einer Dampfzugabe in den Garraum. Die Regelung der Dampfzugabe kann insbesondere zu einer optimalen Dampfsättigung in dem Garraum führen, wodurch sich wiederum Energie zur Dampferzeugung einsparen lässt. Durch die genaue Dampfregelung kann mit einer geringeren Wassermenge eine längere Dampfunterstützung erreicht werden.

Es ist zudem eine erfindungsgemäße Ausgestaltung, dass der Betrieb des Gargeräts abhängig von dem Ergebnis der spektroskopischen Auswertung des durch die Objekterkennung erkannten Objekts und einem Ergebnis einer Objektbewertung dieses Objekts geändert wird. Die kombinatorische Auswertung bzw. Bewertung ermöglicht eine besonders zuverlässige Analyse der in dem Garraum befindlichen Stoffen, Zuständen usw. Beispielsweise kann ein Bräunungsgrad von Gargut auch optisch über eine Helligkeits- und/oder Farbanalyse erkannt werden. Durch Kombination der optischen und der spektroskopischen Auswertung lässt sich der Bräunungsgrad besonders genau bestimmen. Dies kann analog z.B. zur Feststellung eines Verschmutzungsgrads einer Garraumwandung aufgrund einer optischen Auswertung und einer spektroskopischen Auswertung erreicht werden. Die optische Auswertung kann z.B. mittels eines Vergleichs einer Intensität einer Streustrahlung an einer Messfläche gegenüber einer sauberen Messfläche durchgeführt werden, die spektroskopische Auswertung durch Feststellung eines Vorhandenseins und ggf. einer Menge an Fett auf der Messfläche.

Das Haushalts-Gargerät kann noch weitere Sensoren aufweisen, deren Messergebnisse zusammen mit der spektroskopischen Auswertung verwendet werden können, um einen Betrieb des Haushalts-Gargeräts zu steuern, z.B. um ein Garzeitende noch genauer zu bestimmen oder vorherzusagen.

Es ist eine Weiterbildung, dass als ein weiterer Sensor ein Backsensor verwendet wird, insbesondere um ein Garzeitende und/oder einen Bräunungsgrad von Gargut (z.B. Kuchen) besonders präzise bestimmen zu können.

Es ist noch eine Weiterbildung, dass als ein weiterer Sensor ein Kerntemperatursensor verwendet wird, insbesondere um ein Garzeitende und/oder einen Bräunungsgrad von Gargut (z.B. Fleischstücken) besonders präzise bestimmen zu können.

Es ist ferner eine Ausgestaltung, dass von der Messfläche diffus reflektiertes Licht gemessen wird, insbesondere praktisch nur diffus reflektiertes Licht. Dies ermöglicht eine besonders rauscharme Messung und zuverlässige spektroskopische Auswertung. Es ist eine Weiterbildung, dass kein Lichtpfad existiert, der einen Lichteinfall von an der Messfläche spiegelnd reflektiertem Licht in eine Kamera erlaubt.

Es ist ferner eine Ausgestaltung, dass mehrere Wellenlängenbereiche, ggf. alle Wellenlängenbereiche, infrarote Wellenlängenbereiche sind, insbesondere Nahinfrarot (NIR)-Bereiche. Dies ist besonders vorteilhaft, da viele Stoffe im Infrarotbereich, insbesondere Nahinfrarotbereich, charakteristische Absorptionsbanden zeigen und sich diese Stoffe dadurch besonders effektiv berücksichtigen lassen.

Es ist auch eine Ausgestaltung, dass die Wellenlängenbereiche mindestens einen sichtbaren roten Bereich, einen sichtbaren grünen Bereich und einen sichtbaren blauen Bereich aufweisen. Dadurch können auch im sichtbaren Bereich erkennbare Eigenschaften und Änderungen mitberücksichtigt werden. Speziell kann durch gleichzeitige Einstrahlung von rotem, grünem und blauem Licht ein weißes Mischlicht erzeugt werden. Somit kann eine Lichtquelle auch zur Allgemeinbeleuchtung und/oder zur Objekterkennung im sichtbaren Spektralbereich verwendet werden.

Die Aufgabe wird auch gelöst durch ein Haushalts-Gargerät, wobei das Haushalts-Gargerät zum Ablauf des Verfahrens wie oben eingerichtet ist. Das Haushalts-Gargerät kann analog zu dem Verfahren ausgebildet sein und weist die gleichen Vorteile auf.

Das Haushalts-Gargerät kann beispielsweise einen Garraum, mindestens eine Lichtquelle zum Abstrahlen von Licht mit mindestens einem infraroten Wellenlängenbereich in den Garraum und mindestens eine bildpunktartig detektierende Kamera zum Messen von in dem Garraum reflektierten Licht aufweisen, wobei das Haushalts-Gargerät außerdem eine Auswerteeinrichtung zur Objekterkennung in einem von der mindestens einen Kamera aufgenommenen Bild und zur spektroskopischen Auswertung der von der mindestens einen Kamera bildpunktartig ermittelten Messergebnisse, die zu mindestens einem durch die Objekterkennung erkannten Objekt gehören, auf Stoffe des Objekts abhängig von einer Art des erkannten Objekts und eine Steuereinrichtung zum Steuern eines Garablaufs, abhängig von einem Ergebnis der Auswertung aufweist.

Mindestens eine Lichtquelle strahlt Licht in einem infraroten Wellenlängenbereich in den Garraum ein. Dies ist insbesondere vorteilhaft zur Detektion organischer Moleküle wie z.B. Fette, Kohlenhydrate oder Proteine. Die Lichtquelle kann eine dedizierte IR-Lichtquelle sein.

Die Auswerteeinrichtung kann in die Steuereinrichtung integriert sein bzw. kann die Steuereinrichtung auch eine Auswertefunktion aufweisen.

Die mindestens eine Lichtquelle kann mindestens eine Halogenlampe umfassen. Die mindestens eine Lichtquelle kann alternativ oder zusätzlich mindestens eine Leuchtdiode umfassen.

Es ist eine Ausgestaltung, dass die mindestens eine Lichtquelle mehrere Lichtquellen aufweist, die Licht verschiedener Wellenlängenbereiche erzeugen und das Haushalts-Gargerät dazu eingerichtet ist, die Lichtquellen verschiedener Wellenlängenbereiche zeitlich seriell bzw. in Reihe anzusteuern (z.B. zu aktivieren oder einzuschalten). Dabei ist es eine zur kostengünstigen Erreichung einer besonders kompakten Bauweise bei scharf abgrenzbaren Wellenlängenbereichen vorteilhafte Weiterbildung, dass die Lichtquellen Leuchtdioden sind.

Es ist eine Weiterbildung, dass während eines zeitlichen Beleuchtungsabschnitts nur die mindestens eine Lichtquelle eines einzigen Wellenlängenbereichs zum Leuchten gebracht wird. Es ist eine alternative oder zusätzliche Weiterbildung, dass während eines zeitlichen Beleuchtungsabschnitts Lichtquellen, die Licht verschiedener Wellenlängenbereiche erzeugen, zum Leuchten gebracht werden. Dadurch kann Licht auch beliebiger Farbmischung in den Garraum eingestrahlt werden. Beispielsweise können rote, grüne und blaue Bilder aufgenommen werden und einzeln oder als (weißes) Überlagerungsbild ausgewertet werden. Alternativ kann der Garraum durch kombiniertes rotes, grünes und blaues (z.B. weißes, aber ggf. auch farbiges) Licht beleuchtet werden, was Zeit spart. Allgemein kann der Garraum mit Licht innerhalb des durch die Lichtquellen aufspannbaren Farbraums beleuchtet werden.

Es ist noch eine Ausgestaltung, dass mindestens zwei Lichtquellen Licht verschiedener IR-Wellenlängenbereiche erzeugen. Dies ermöglicht eine besonders zuverlässige Detektion organischer Moleküle.

Die Kamera kann auf eine oder auf mehrere Messflächen gerichtet sein. Die Kamera kann mit einer Auswerteeinrichtung zur Objekterkennung und ggf. Objektbewertung verbunden sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein erfindungsgemäßes Haushaltsgerät; und
- Fig.2: zeigt einen möglichen Ablauf zum Betreiben des Haushaltsgeräts.

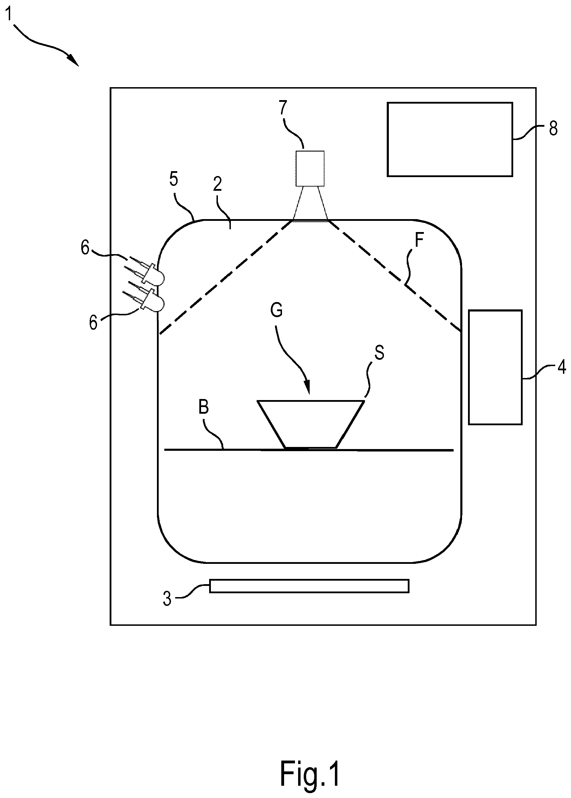

**Fig.1** zeigt ein Haushalts-Gargerät in Form eines Backofens 1 zumindest mit einer Dampfgarfunktionalität. Der Backofen 1 weist dazu einen Garraum 2 auf, der mittels mindestens einer Heizvorrichtung 3 heizbar ist. Der Garraum 2 ist mittels einer Dampferzeugungsvorrichtung 4 mit Dampf beaufschlagbar. In den Garraum 2 kann Gargut G eingebracht werden, das hier in einem Gargeschirr in Form einer Schale S aufgenommen ist. Die Schale G ist auf einem Backblech B abgelegt.

Der Backofen 1 weist ferner mehrere hinter Garraumwandung oder Ofenmuffel 5 eingebrachte Lichtquellen in Form von mehreren LEDs 6 auf. Die LEDs 6 erzeugen Licht in jeweils unterschiedlichen Wellenlängenbereichen, und zwar mindestens rotes, grünes und blaues Licht als auch Nahbereichs-Infrarotlicht in mindestens zwei Wellenlängenbereichen. Folglich sind mindestens fünf LEDs 6 vorhanden, die pro Wellenlängenbereich separat ansteuerbar sind. Die LEDs 6 sind insbesondere hinter der Ofenmuffel 5 angeordnet, wobei deren Licht durch mindestens eine Öffnung der Ofenmuffel 5 in den Garraum 2 fällt. Die mindestens eine Öffnung kann durch ein Sichtfenster abgedeckt sein (nicht gezeigt).

Der Backofen 1 weist zudem einen in einer Decke der Ofenmuffel 5 eingebrachten Lichtsensor in Form einer Kamera 7 auf. Ein Sichtfeld F der Kamera 7 ist hier rein beispielhaft vertikal ausgerichtet und umfasst hier Teile der Ofenmuffel 5 als auch das Backblech B mit der darauf abgelegten Schale S. Die Kamera 7 ist so angeordnet, dass sie kein von einer LED 6 abgestrahltes Licht direkt empfängt und auch keinen Spiegelungsreflex an der Ofenmuffel 5. Die Kamera 7 empfängt und misst also praktisch nur diffus reflektiertes Streulicht. Sollte doch einmal spekular reflektiertes Licht in die Kamera 7 fallen, kann ein solcher Spiegelungsreflex erkannt und unterdrückt - z.B. ausgeblendet - werden.

Die Kamera 7 ist mit einer Steuereinrichtung 8 verbunden. Die Steuereinrichtung 8 dient zur Steuerung des Backofens 1, beispielsweise zur Steuerung von Garprogrammen und kann dazu beispielsweise die Heizvorrichtung 3 und die Dampferzeugungseinrichtung 4 ansteuern. Die Steuereinrichtung 8 kann auch die LEDs 6 und die Kamera 7 ansteuern und dient zudem zur Auswertung der von der Kamera 7 ermittelten Messergebnisse (Bilder), und zwar zur Objekterkennung, Objektauswertung und spektroskopischen Auswertung. Die Steuereinrichtung 8 synchronisiert unter anderem die Aussendung von Licht bzw. Lichtpulsen durch die LEDs 6 und die Bildaufnahme durch die Kamera 7, so dass die Lichtpulse den Bildern eineindeutig zugeordnet werden können.

Beispielsweise können die LEDs 6 mittels der Steuereinrichtung 8 so angesteuert werden, dass sie nacheinander (zeitlich seriell) Lichtpulse in den Garraum 2 abgeben. Die Kamera 7 ist für alle Wellenlängen empfindlich und nimmt für jede LED 6 bzw. für jeden der Lichtpulse ein jeweiliges Bild auf. Das Bild ist bildpunktartig aufgebaut und weist eine Auflösung z.B. von 512 x 512 oder 2048 x 1024 Bildpunkten auf.

Insbesondere können die roten, grünen und blauen Bilder zu einem Weißbild zusammengeführt werden. Mittels des Weißbilds kann mittels der Steuereinrichtung 8 eine Objekterkennung durchgeführt werden, beispielsweise das Gargut G, die Schale S, das Backblech B und Teile der Seitenwand der Ofenmuffel 5 erkannt werden.

Die Bildpunkte können mittels der Steuereinrichtung 8 einzeln spektroskopisch ausgewertet werden, insbesondere dadurch, dass ihre wellenlängenabhängigen Intensitäten miteinander verglichen werden. Zusätzlich oder alternativ können die zeitlichen Verläufe der Intensitäten und/oder Intensitätsverhältnisse bestimmt und ausgewertet werden.

Dabei können insbesondere aufgrund einer Bilderkennung erkannte unterschiedliche Objekte getrennt oder unterschiedlich spektroskopisch ausgewertet werden. Beispielsweise kann ein Gargutbehälter (hier: die Schale S) durch Objekterkennung, Objektbewertung und/oder spektroskopische Auswertung als Kunststoffschale erkannt werden. Der Backofen 1 kann beispielsweise einen Warnhinweis an einen Nutzer ausgeben. Der Warnhinweis kann z.B. nicht ausgegeben werden, wenn als das Material der Schale Steingut oder Porzellan erkannt wird. Vor einer Mikrowellenbestrahlung kann vor metallischen Gargutbehältern gewarnt werden usw.

Durch Objekterkennung, Objektbewertung und/oder spektroskopische Auswertung des Garguts G kann auch ein Bräunungsgrad erkannt werden, z.B. optisch durch eine Farbänderung zu dunkleren Farben hin und/oder spektroskopisch durch Erkennung von bei einer Bräunung ablaufenden chemischen Vorgängen. Als das Ergebnis einer solchen Objekterkennung und/oder spektroskopische Auswertung kann z.B. eine Garraumtemperatur geändert werden und ggf. auch ein Garablauf beendet werden.

Durch Objekterkennung und/oder spektroskopische Auswertung der Ofenmuffel 5 kann deren Verschmutzungsgrad bestimmt werden. Der Verschmutzungsgrad kann mittels Objekterkennung bzw. Objektbewertung auf Grundlage einer Änderung des Grads der diffusen Reflexion im Vergleich zu einer sauberen Oberfläche erkannt werden. Die Verschmutzung kann mittels spektroskopischer Auswertung durch die Anwesenheit von typischen Verschmutzungsstoffen wie Fett erkannt werden. Dies kann analog auf das Backblech B oder eine nicht gezeigte Prallwand angewandt werden. Diese Erkennung des Verschmutzungsgrads kann beispielsweise dazu genutzt werden, um einem Nutzer einen Hinweis auf eine Reinigung des Garraums zu geben, z.B. auf ein Durchführen einer pyrolytischen oder katalytischen Selbstreinigung.

Zusätzlich können eine Anwesenheit und eine Konzentration von Dampf in dem Garraum 2 durch spektroskopische Auswertung bestimmt werden. Dies ermöglicht eine genaue Regelung einer Dampfzugabe in den Garraum.

Insbesondere kann die Kombination aus Objekterkennung (und Objektbewertung) und/oder aus spektroskopischer Auswertung eine Erkennungsgenauigkeit erheblich steigern, beispielsweise auch eine Objekterkennung verbessern.

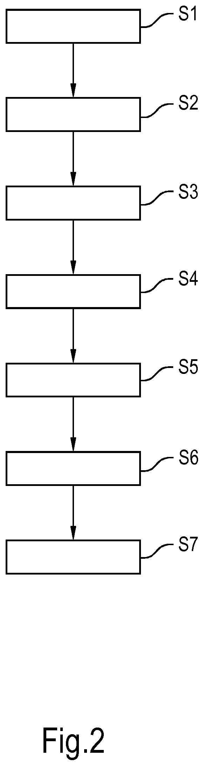

**Fig.2** zeigt einen möglichen Ablauf zum Betreiben eines Haushalts-Gargeräts anhand des Backofens 1.

In einem ersten Schritt S1 werden die LEDs 6 so angesteuert, dass sie nacheinander Lichtpulse mit unterschiedlichen Wellenlängenbereichen (z.B. rot, grün, blau und zweimal nahinfrarot) in den Garraum 2 abgeben, und zwar mit einzelnen Wellenlängenbereichen und/oder als Mischung verschiedener Wellenlängenbereiche. Dabei kann insbesondere eine den LEDs 6 gemeinsame Messfläche angestrahlt werden.

In einem zweiten Schritt S2 werden mittels der Kamera 7 Bilder des Garraums 2 aufgenommen, und zwar für jeden Wellenlängenbereich mindestens ein Bild. Das Bild detektiert aus dem Garraum 2 zurückgeworfenes Licht. Dies kann an der Messfläche und/oder in der Atmosphäre des Garraums reflektiertes, insbesondere diffus reflektiertes, Licht sein.

In einem dritten Schritt S3 wird anhand eines der Bilder oder anhand einer Kombination von Bilden (z.B. eines aus roten, grünen und blauen Lichtanteilen zusammengesetzten Weißlichtbilds) eine Objekterkennung durchgeführt.

In einem vierten Schritt S4 wird eine Objektbewertung von in dem Bild bzw. in den Bildern erkannten Objekten durchgeführt.

In einem fünften Schritt S5 wird eine spektroskopische Auswertung von in dem Bild bzw. in den Bildern erkannten Objekten durchgeführt, ggf. auch als zeitliche Abfolge zusammen mit zuvor aufgenommenen Bildern. Diese Auswertung kann insbesondere für jeden Bildpunkt einzeln durchgeführt werden.

In einem sechsten Schritt S6 wird werden die optische Auswertung und die spektroskopische Auswertung kombiniert bewertet, um ein auf beiden Bewertungen oder Auswertungen beruhendes Ergebnis zu erlangen.

In einem siebten Schritt S7 wird der Backofen 1 abhängig von einem Ergebnis einer kombinierten Auswertung betrieben.

Selbstverständlich ist die vorliegende Erfindung nicht auf das gezeigte Ausführungsbeispiel beschränkt.

So kann der Lichtsensor anstatt an der Decke des Garraums auch an einer anderen Wand des Garraums angebracht sein, insbesondere in einer der Ecken des Garraums, oder in der Tür angebracht sein.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Backofen
- 2: Garraum
- 3: Heizvorrichtung
- 4: Dampferzeugungsvorrichtung
- 5: Ofenmuffel
- 6: LED
- 7: Kamera
- 8: Steuereinrichtung
- B: Backblech
- F: Sichtfeld
- G: Gargut
- S: Schale
- S1 - S7: Verfahrensschritte

## Patentansprüche

1. Verfahren (S1-S7) zum Betreiben eines Gargeräts (1), bei dem
- ein Garraum (2) mit Licht verschiedener Wellenlängenbereiche, von denen zumindest ein Wellenlängenbereich ein infraroter Wellenlängenbereich ist, bestrahlt wird (S1) und
- in dem Garraum (2) reflektiertes Licht mittels mindestens einer Kamera (7) bildpunktartig gemessen wird (S2),
wobei
- in einem von der mindestens einen Kamera (7) aufgenommenen Bild eine Objekterkennung durchgeführt wird (S3),
- für Bildpunkte, die zu mindestens einem durch die Objekterkennung erkannten Objekt gehören, jeweils abhängig von einer Art des erkannten Objekts Messergebnisse zum Bestimmen von Stoffen des Objekts spektroskopisch ausgewertet werden (S5) und
- ein Betrieb des Gargeräts (1) abhängig von einem Ergebnis der spektroskopischen Auswertung geändert wird (S7)
**dadurch gekennzeichnet, dass**
- durch die Objekterkennung ein Gargutbehälter erkannt wird und folgend durch die spektroskopische Auswertung der zu dem Gargutbehälter gehörigen Bildpunkte ein Material des Gargutbehälters bestimmt wird.

2. Verfahren (S1-S7) nach Anspruch 1, bei dem Licht verschiedener Wellenlängenbereiche zeitlich seriell in den Garraum (2) eingestrahlt wird (S1).

3. Verfahren (S1-S7) nach einem der vorhergehenden Ansprüche, bei dem die Messergebnisse dadurch spektroskopisch ausgewertet werden, dass ihre Intensitätsverhältnisse bestimmt werden, indem wellenlängenabhängige Intensitäten miteinander verglichen werden (S5).

4. Verfahren (S1-S7) nach Anspruch 3, bei dem die Messergebnisse dadurch spektroskopisch ausgewertet werden, dass zeitliche Änderungen der Intensitätsverhältnisse bestimmt werden (S5).

5. Verfahren (S1-S7) nach einem der vorhergehenden Ansprüche, bei dem für jeden Bildpunkt jeweilige Messergebnisse spektroskopisch ausgewertet werden (S5).

6. Verfahren (S1-S7) nach einem der vorhergehenden Ansprüche, bei dem der Betrieb des Gargeräts (1) abhängig von dem Ergebnis der spektroskopischen Auswertung (S5) des durch die Objekterkennung (S3) erkannten Objekts und einem Ergebnis einer Objektbewertung (S4) des durch die Objekterkennung (S3) erkannten Objekts (S, G, 5) geändert wird (S6, S7).

7. Verfahren (S1-S7) nach Anspruch 6, bei dem durch die Objekterkennung eine Garraumwandung erkannt wird und folgend durch eine spektroskopische Auswertung der zu der Garraumwandung gehörigen Bildpunkte auf Stoffe und durch Objektbewertung (S4) ein Verschmutzungsgrad der Garraumwandung bestimmt wird.

8. Verfahren (S1-S7) nach einem der vorhergehenden Ansprüche, wobei zumindest zwei Wellenlängenbereiche Nahinfrarot-Wellenlängenbereiche sind.

9. Verfahren (S1-S7) nach einem der vorhergehenden Ansprüche, wobei die Wellenlängenbereiche mindestens einen sichtbaren roten Bereich, einen sichtbaren grünen Bereich und einen sichtbaren blauen Bereich aufweisen.

10. Gargerät (1), wobei das Gargerät (1) zum Ablauf des Verfahrens (S1-S7) nach einem der vorhergehenden Ansprüche eingerichtet ist und aufweist:
- einen Garraum (2),
- mindestens eine Lichtquelle (6) zum Abstrahlen von Licht mit mindestens einem infraroten Wellenlängenbereich in den Garraum (2) und
- mindestens eine Kamera (7) zum bildpunktartigen Messen von in dem Garraum (2) reflektierten Lichts,
wobei das Gargerät (1) ferner aufweist:
- eine Auswerteeinrichtung (8) zur Objekterkennung in einem von der mindestens einen Kamera (7) aufgenommenen Bild und zur spektroskopischen Auswertung der von der mindestens einen Kamera (7) bildpunktartig ermittelten Messergebnisse, die zu mindestens einem durch die Objekterkennung erkannten Objekt gehören, auf Stoffe des Objekts, abhängig von einer Art des erkannten Objekts und
- eine Steuereinrichtung (8) zum Steuern eines Garablaufs abhängig von einem Ergebnis der Auswertung, **dadurch gekennzeichnet, dass** die Auswerteeinrichtung (8) dazu eingerichtet ist, durch die Objekterkennung einen Gargutbehälter zu erkennen und folgend durch die spektroskopische Auswertung der zu dem Gargutbehälter gehörigen Bildpunkte ein Material des Gargutbehälters zu bestimmen.

11. Gargerät (1) nach Anspruch 10, wobei die mindestens eine Lichtquelle mehrere Lichtquellen (6) aufweist, die Licht verschiedener Wellenlängenbereiche, einschließlich eines sichtbaren roten Bereichs, eines sichtbaren grünen Bereichs, eines sichtbaren blauen Bereichs und mindestens zwei verschiedener IR-Wellenlängenbereiche, erzeugen und das Gargerät (1) dazu eingerichtet ist, die Lichtquellen (6) zeitlich seriell anzusteuern.

## Claims

1. Method (S1-S7) for operating a cooking appliance (1), wherein
- a cooking compartment (2) is irradiated (S1) by light of different wavelength ranges, of which at least one wavelength range is an infrared wavelength range, and
- light reflected in the cooking compartment (2) is measured (S2) on a pixel basis using at least one camera (7),
wherein
- an object recognition is performed (S3) in an image taken by the at least one camera (7),
- for pixels, which are associated with at least one object recognised by the object recognition, measurement results are stereoscopically evaluated (S5) for the determination of substances of the object, depending on the type of recognised object in each case, and
- an operation of the cooking appliance (1) is adjusted (S7) depending on a result of the spectroscopic evaluation,
**characterised in that**
- a container in which food is to be cooked is recognised by way of the object recognition and consequently a material of the container in which food is to be cooked is determined by way of the spectroscopic evaluation of the pixels associated with the container in which food is to be cooked.

2. Method (S1-S7) according to claim 1, wherein light of different wavelength ranges is irradiated (S1) temporally serially into the cooking compartment (2).

3. Method (S1-S7) according to one of the preceding claims, wherein the measurement results are spectroscopically evaluated so that their intensity relationships are determined, in that wavelength-dependent intensities are compared with each other (S5).

4. Method (S1-S7) according to claim 3, wherein the measurement results are spectroscopically evaluated so that variations over time of the intensity relationships are determined (S5).

5. Method (S1-S7) according to one of the preceding claims, wherein respective measurement results are spectroscopically evaluated (S5) for each pixel.

6. Method (S 1-S7) according to one of the preceding claims, wherein the operation of the cooking appliance (1) is adjusted (S6, S7) depending on the result of the spectroscopic evaluation (S5) of the object detected by the object recognition (S3) and a result of an object evaluation (S4) of the object (S, G, 5) detected by object recognition (S3).

7. Method (S1-S7) according to claim 6, wherein a cooking compartment wall is recognised by way of the object recognition, and consequently a degree of soiling of the cooking compartment wall is determined by way of a spectroscopic evaluation of the pixels associated with the cooking compartment wall with regard to substances and by way of object evaluation (S4).

8. Method (S 1-S7) according to one of the preceding claims, wherein at least two wavelength ranges are near-infrared ranges.

9. Method (S1-S7) according to one of the preceding claims, wherein the wavelength ranges have at least one visible red range, one visible green range and one visible blue range.

10. Cooking appliance (1), wherein the cooking appliance (1) is designed to carry out the method (S 1-S7) according to one of the preceding claims and has:
- a cooking compartment (2),
- at least one light source (6) for radiating light with at least one infrared wavelength range into the cooking compartment (2) and
- at least one camera (7) for measuring, on a pixel basis, light reflected in the cooking compartment (2),
wherein the cooking appliance (1) also has:
- an evaluation device (8) for object recognition in an image taken by the at least one camera (7) and for spectroscopic evaluation of the measurement results determined on a pixel basis by the at least one camera (7), which are associated with at least one object recognised by the object recognition, with regard to substances, depending on the type of recognised object and
- a control device (8) for managing a cooking sequence depending on a result of the evaluation,
**characterised in that** the evaluation device (8) is configured to recognise a container in which food is to be cooked by way of the object recognition and consequently to determine a material of the container in which food is to be cooked by way of the spectroscopic evaluation of the pixels associated with the container in which food is to be cooked.

11. Cooking appliance (1) according to claim 10, wherein the at least one light source has several light sources (6) which generate light of different wavelength ranges, including a visible red range, a visible green range, a visible blue range and at least two different IR wavelength ranges, and the cooking appliance (1) is set up to actuate the light sources (6) temporally serially.

## Revendications

1. Procédé (S1-S7) de fonctionnement d'un appareil de cuisson (1), dans lequel
- une chambre de cuisson (2) est illuminée (S1) avec de la lumière de différentes gammes de longueurs d'onde, dont au moins une gamme de longueurs d'onde est une gamme de longueurs d'onde infrarouges, et
- la lumière réfléchie dans la chambre de cuisson (2) est mesurée (S2) au moyen d'une caméra (7) pixel par pixel,
où
- une reconnaissance d'objets est effectuée (S3) dans une image prise par l'au moins une caméra (7),
- pour les pixels qui appartiennent à au moins un objet reconnu par la reconnaissance d'objets, des résultats de mesure sont évalués spectroscopiquement (S5) respectivement en fonction de l'objet reconnu pour déterminer des matériaux de l'objet et
- un fonctionnement de l'appareil de cuisson (1) est modifié (S7) en fonction du résultat de l'évaluation spectroscopique
**caractérisé en ce que**
- par la reconnaissance d'objets, un récipient de produits de cuisson est reconnu, en conséquence de quoi un matériau du récipient de produits de cuisson est déterminé par l'évaluation spectroscopique des pixels appartenant au récipient de produits de cuisson.

2. Procédé (S1-S7) selon la revendication 1, dans lequel de la lumière de différentes gammes de longueurs d'onde est irradiée (S1) successivement dans la chambre de cuisson (2).

3. Procédé (S1-S7) selon l'une quelconque des revendications précédentes, dans lequel les résultats de mesure sont évalués spectroscopiquement de sorte que leurs rapports d'intensité sont déterminés pendant que des intensités fonctions de la longueur d'onde sont comparées entre elles (S5).

4. Procédé (S1-S7) selon la revendication 3, dans lequel les résultats de mesure sont évalués spectroscopiquement de sorte que des modifications temporelles des rapports d'intensité sont déterminés (S5).

5. Procédé (S1-S7) selon l'une quelconque des revendications précédentes, dans lequel pour chaque pixel, des résultats de mesure respectifs sont évalués spectroscopiquement (S5).

6. Procédé (S1-S7) selon l'une quelconque des revendications précédentes, dans lequel le fonctionnement de l'appareil de cuisson (1) est modifié (S6, S7) en fonction du résultat de l'évaluation spectroscopique (S5) de l'objet reconnu par la reconnaissance d'objets (S3) et en fonction d'un résultat d'une évaluation d'objet (S4) de l'objet reconnu (S, G, 5) par la reconnaissance d'objet (S3).

7. Procédé (S1-S7) selon la revendication 6, dans lequel les parois de la chambre de cuisson sont reconnues par la reconnaissance d'objets, en conséquence de quoi un degré de salissure des parois de la chambre de cuisson est déterminé par une évaluation spectroscopique des pixels de matériau appartenant aux parois de la chambre de cuisson et par reconnaissance d'objets (S4).

8. Procédé (S1-S7) selon l'une quelconque des revendications précédentes, dans lequel au moins deux gammes de longueurs d'onde sont des gammes de longueurs d'onde du proche infrarouge.

9. Procédé (S1-S7) selon l'une quelconque des revendications précédentes, dans lequel les gammes de longueurs d'onde présentent au moins une gamme visible rouge, une gamme visible verte et une gamme visible bleue.

10. Appareil de cuisson (1), l'appareil de cuisson (1) étant aménagé pour le déroulement du procédé (S1-S7) selon l'une quelconque des revendications précédentes, et présentant :
- un appareil de cuisson (2),
- au moins une source de lumière (6) pour l'émission de lumière avec au moins une gamme de longueurs d'onde infrarouge dans la chambre de cuisson (2) et
- au moins une caméra (7) pour la mesure pixel par pixel de la lumière réfléchie dans la chambre de cuisson (2),
l'appareil de cuisson (1) présentant en outre :
- un dispositif d'évaluation (8) destiné à la reconnaissance d'objets dans une image prise par l'au moins une caméra (7) et pour l'évaluation spectroscopique des résultats de mesure déterminés pixel par pixel par l'au moins une caméra (7) appartenant à au moins un objet reconnu par la reconnaissance d'objets, relatifs au matériau de l'objet, en fonction d'un type de l'objet reconnu, et
- un dispositif de commande (8) pour commander un déroulement de cuisson en fonction du résultat de l'évaluation,
**caractérisé en ce que**
le dispositif d'évaluation (8) est conçu pour reconnaître par la reconnaissance d'objets un récipient de produits de cuisson, en conséquence pour déterminer un matériau du récipient de produits de cuisson par l'évaluation spectroscopique des pixels appartenant au récipient de produits de cuisson.

11. Appareil de cuisson (1) selon la revendication 10, dans lequel l'au moins une source de lumière présente plusieurs sources de lumière (6) qui créent de la lumière de différentes gammes de longueurs d'onde, comprenant une gamme visible rouge, une gamme visible verte et une gamme visible bleue, et au moins deux différentes gammes de longueurs d'onde IR, et l'appareil de cuisson (1) est conçu pour contrôler les sources de lumière (6) successivement.
